(19) Europäisches Patentamt
European Patent Office
Office européen des brevets

(11) EP 0 514 828 B1

(12) **EUROPEAN PATENT SPECIFICATION**

(45) Date of publication and mention of the grant of the patent: **05.11.1997 Bulletin 1997/45**

(21) Application number: **92108417.4**

(22) Date of filing: **19.05.1992**

(51) Int. Cl.$^6$: **C07F 7/28**, C07F 7/00, C07F 7/08, C07F 7/10, C07F 17/00 // C08F10/00, C08F4/74

(54) **Preparation of addition polymerization catalysts**

Herstellung von Additionspolymerisationskatalysatoren

Préparation de catalyseurs de polymérisation, type addition

(84) Designated Contracting States:
**BE DE ES FR GB IT NL**

(30) Priority: **20.05.1991 US 702475**

(43) Date of publication of application:
**25.11.1992 Bulletin 1992/48**

(73) Proprietor:
**THE DOW CHEMICAL COMPANY**
**Midland, Michigan 48640 (US)**

(72) Inventor: **Devore, David D.**
**Midland, Michigan 48640 (US)**

(74) Representative:
**Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**81635 München (DE)**

(56) References cited:
**EP-A- 0 416 815**
**EP-A- 0 418 044**
**EP-A- 0 420 436**

- **CHEMICAL ABSTRACTS, vol. 115, 1991, Columbus, Ohio, US; abstract no. 49896D, SZYMONIAK, J. ET AL: 'SYNTHESIS OF BENT TITANOCENE METALLOLIGANDS WITH THE (DIPHENYLPHOSPHINO)TETRAMETHYLCYCLO PENTADIENYL MOIETY. X-RAY STRUCTURE OF [CYCLIC] [(ETA5-C5Me4PPh2)2TiCl2]Mo(CO)4' page 870 ;**
- **JOURNAL OF ORGANOMETALLIC CHEMISTRY vol. 254, 1983, pages 69 - 73; SCHWEMLEIN, H. ET AL: 'ANSA-METALLOCENE DERIVATIVES. V. SYNTHESIS OF TETRAMETHYLETHYLENE-BRIDGED TITANOCENE AND ZIRCONOCENE DERIVATIVES VIA REDUCTIVE FULVENE COUPLING'**
- **JOURNAL OF ORGANOMETALLIC CHEMISTRY vol. 385, 1990, pages 39 - 42; OKUDA, J.: 'KOMPLEXE MIT STERISCH ANSPRUCHSVOLLEN LIGANDEN. XIII. KOMPLEXIERUNG DES 1,3-DI-t-BUTYLCYCLOPENTADIENYL-LIGANDEN AM EISEN, COBALT UND TITAN'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 514 828 B1

Printed by Rank Xerox (UK) Business Services
2.14.23/3.4

## Description

The present invention relates to a process for forming addition polymerization catalysts. More particularly the present invention relates to such a process that utilizes low cost oxidizing agents to raise the oxidation state of transition metal cations in metal coordination complexes that are useful for addition polymerization catalysts.

Numerous metal coordination complexes are known in the art. Especially useful are transition metal complexes including such complexes involving cyclopentadienyl and substituted cyclopentadienyl groups. Often such complexes are used in combination with an aluminum compound such as an aluminoxane to form catalytically active systems. Such complexes may be prepared by forming an initial complex wherein the metal cation is of a valence that is one less than that desired in the ultimate complex and oxidizing the metal to a higher valence using oxidizing agents such as silver or lead compounds. Disadvantageously however this procedure generates an undesirable heavy metal contaminated waste stream that must be disposed of. Thus it would be desirable if there were provided an oxidizing process for preparing transition metal complexes that does not generate heavy metal byproducts.

The present process is especially useful in preparing metal coordination complexes wherein the metal is bound to a delocalized substituted $\pi$-bonded moiety in a manner so as to induce a constrained geometry about the metal. Preferably the metal is bound to a cyclopentadienyl, substituted cyclopentadienyl or similar group by both a $\eta^5$-bond and a bridging linkage including other ligands of the metal. The complexes also preferably include metals having useful catalytic properties. Such complexes are disclosed in EP-A-416,815 published March 13, 1991. Cationic derivatives of such complexes are disclosed in EP-A-418,044 published March 20, 1991.

In the above EP-A-416 815, metal complexes in the +4 oxidation state are prepared from lower oxidation state precursors using noninterfering oxidants exemplified by AgCl. In Inorg.Chim.Acta, 180(2), 153-160 (1991), carbon tetrachloride was used to oxidize ring phosphine substituted biscyclopentadienyltitanium chloride to the corresponding dichloride complex.

According to the present invention there is provided a process for preparing metal coordination complexes corresponding to the formula:

I

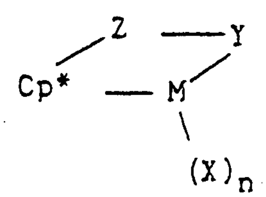

wherein:

M is a metal of Group 4 or the Lanthanide Series of the Periodic Table of the Elements;

Cp* is a substituted cyclopentadienyl group bound in an $\eta^5$ bonding mode to M;

Z is a moiety comprising boron, or a member of Group 14 of the Periodic Table of the Elements, and optionally sulfur or oxygen, said moiety having up to 20 non-hydrogen atoms, and optionally Cp* and Z together form a fused ring system;

X independently each occurrence is an anionic ligand group having up to 30 non-hydrogen atoms;

n is 1 or 2 depending on the valence of M; and

Y is an anionic ligand group bonded to Z and M comprising nitrogen, phosphorus, oxygen or sulfur and having up to 20 non-hydrogen atoms; optionally Y and Z together form a fused ring system comprising the steps of:

A) contacting a metal compound of the formula $MX_{n+1}$ or a coordinated adduct thereof with a dianionic salt compound corresponding to the formula:

$$(L^{+x})_y(Cp^*\text{-}Z\text{-}Y)^{-2} \qquad (II)$$

or

$$((LX'')^{+x})_y(Cp^*\text{-}Z\text{-}Y)^{-2} \qquad (III);$$

wherein:

L is a metal of Group 1 or 2 of the Periodic Table of the Elements,
X" is bromo, chloro or iodo,
x and y are either 1 or 2 and the product of x and y equals 2, and
M, X, Cp*, Z, and Y are as previously defined;

B) contacting the resulting complex with an organic halide selected from the group consisting of methyl chloride, methylene chloride, chloroform, 1,1,1-trichloroethane, tetrachloroethylene, 1-chloropropane, 1-chlorodecane, benzylchloride and chlorobenzene under reaction conditions suitable to raise the oxidation state of the metal and incorporate only the halogen ligand of the organic halide into the complex; and

C) recovering the resulting product

By use of the term "delocalized π-bonded moiety" is meant an unsaturated organic moiety, such as those comprising aromatic, ethylenic or acetylenic functionality, wherein the π-electrons thereof are donated to the metal to form a bond. Examples include alkene-, alkenyl-, alkyne-, alkynyl-, allyl-, polyene-, and polyenyl- moieties as well as unsaturated cyclic systems.

By use of the term "constrained geometry" herein is meant that the metal atom is forced to greater exposure of the active metal site because of one or more substituents on the substituted cyclopentadienyl group that form an extended structure which is ultimately covalently bonded to the metal atom. It is understood that each respective bond between the metal atom and the constituent atoms of the substituted cyclopentadienyl group need not be equivalent. That is, the metal may be symmetrically or unsymmetrically π-bound to the π-bonded moiety. It is also understood that suitable substituted cyclopentadienyl groups also include multi-ring systems such as indenyl and fluorenyl groups

The geometry of the active metal site is further defined as follows. The centroid of the π-bonded moiety may be defined as the average of the respective X, Y, and Z coordinates of the atomic centers forming the π-bonded moiety. The angle, Θ, formed at the metal center between the centroid of the π-bonded moiety and each other ligand of the metal complex may be easily calculated by standard single crystal, X-ray diffraction techniques. Each of these angles may increase or decrease depending on the molecular structure of the constrained geometry metal complex. Those complexes wherein one or more of the angles, Θ, is less than in a similar, comparative complex differing only in the fact that the constrain-inducing substituent is replaced by hydrogen have constrained geometry for purposes of the present invention. Preferably, one or more of the above angles, Θ, decrease by at least 5 percent more preferably 7.5 percent compared to the comparative complex. Highly preferably, the average value of all bond angles, Θ, is also less than in the comparative complex. Most preferably the metal coordination complex having constrained geometry is in the form of a ring structure, that is, the constrain-inducing substituent is part of a ring system which includes the metal.

Preferably, monocyclopentadienyl metal coordination complexes according to the present invention have constrained geometry such that the smallest angle, Θ, is less than 115°, more preferably less than 110°, most preferably less than 105°.

The term "activating cocatalyst" as used herein refers to a secondary component of the catalyst able to cause the metal-containing complex to become effective as an addition polymerization catalyst or alternatively to balance the ionic charge of a catalytically activated species. Examples of the foregoing activating cocatalysts for use herein include aluminum compounds containing an Al-O bond such as the alkylaluminoxanes, especially methylaluminoxane; aluminum alkyls; aluminum halides; aluminum alkylhalides; Lewis acids; ammonium salts; and mixtures of the foregoing.

Particular techniques for the preparation of aluminoxane type compounds are disclosed in US-A-4,542,119 and US-A-5,015,749, the latter publication disclosing the use of a regeneratable water-containing substance such as hydrated alumina, silica, or other substance.

"Addition polymerizable monomers" include, for example, ethylenically unsaturated monomers, acetylenic compounds, conjugated or nonconjugated dienes, polyenes, and carbon monoxide. Preferred monomers include the $C_{2-10}$ α-olefins especially ethylene, propylene, isobutylene, 1-butene, 1-hexene, 4-methyl-1-pentene, and 1-octene. Other preferred monomers include styrene, halo- or alkyl substituted styrene, vinyl chloride, acrylonitrile, methylmethacrylate, tetrafluoroethylene, methacrylonitrile, vinylidene chloride, vinylbenzocyclobutane, and 1,4-hexadiene.

As used herein all reference to the Periodic Table of the Elements and Groups thereof shall be to the version of the Table published by the Handbook of Chemistry and Physics, CRC Press, 1987, utilizing the IUPAC system for naming groups.

Preferred metal coordination complexes are Group 4 or Lanthanide based complexes. Further preferred complexes are those comprising a delocalized $\eta^5$-bonded group which is a substituted cyclopentadienyl group forming a ring structure with the metal atom. Preferred delocalized π-bonded moieties are substituted cyclopentadienyl-, indenyl-, and fluorenyl groups, and saturated derivatives thereof which form a ring structure with the metal atom. Each carbon atom in the substituted cyclopentadienyl radical (other than the carbon atom forming the ring structure with M) may be unsubstituted or substituted with the same or a different radical selected from the group consisting of hydrocarbyl radicals, substituted-hydrocarbyl radicals wherein one or more hydrogen atoms are replaced by halogen atoms, and hydrocarbyl-substituted metalloid radicals wherein the metalloid is selected from Group 14 of the Periodic Table of the Elements. In addition, two or more such substituents may together form a fused ring system. Suitable hydrocarbyl and substituted-hydrocarbyl radicals which may be substituted for at least one hydrogen atom in the cyclopentadienyl radical, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Suitable organometalloid radicals include mono-, di- and trisubstituted organometalloid radicals of Group 14 elements wherein each of the hydrocarbyl groups contains from 1 to 20 carbon atoms. More particularly, suitable organometalloid radicals include trimethylsilyl, triethylsilyl, ethyldimethylsilyl, methyldiethylsilyl, phenyldimethylsilyl, methyldiphenylsilyl, triphenylsilyl, triphenylgermyl and trimethylgermyl.

In the previously disclosed Formula I, suitable anionic ligand groups, X, are illustratively selected from the group consisting of hydride, halo, alkyl, silyl, germyl, aryl, amide, aryloxy, alkoxy, phosphide, sulfide, aceyl, pseudo halides such as cyanide, azide, and acetylacetonate, or a combination thereof.

A highly preferred metal coordination complex corresponds to the formula:

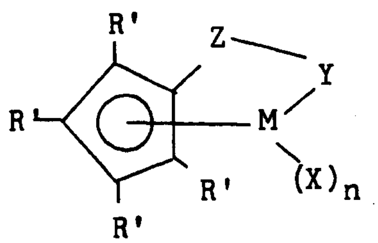

wherein

R' each occurrence is independently selected from the group consisting of hydrogen, alkyl, aryl, silyl, germyl, cyano, halo and combinations thereof having up to 20 non-hydrogen atoms, or two or more R' groups together form a ring system;

X each occurrence independently is selected from the group consisting of hydride, halo, alkyl, aryl, silyl, germyl, aryloxy, alkoxy, amide, siloxy, and combinations thereof having up to 20 non-hydrogen atoms;

Y is -O-, -S-, -NR*-, -PR*-,

M is as previously defined; and

Z is $SiR^*_2$, $CR^*_2$, $SiR^*_2SiR^*_2$, $CR^*_2CR^*_2$, $CR^*=CR^*$, $CR^*_2SiR^*_2$, $GeR^*_2$, $BR^*$, or $BR^*_2$; wherein,

R* each occurrence is independently each occurrence selected from the group consisting of hydrogen, and alkyl, aryl, silyl, halogenated alkyl, halogenated aryl groups, and mixtures thereof, having up to 20 non-hydrogen atoms, or two or more R* groups from Y, Z, or both Y and Z together form a fused ring system.

It should be noted that whereas formula I and the following formulas indicate a cyclic structure for the catalysts, when Y is a neutral two electron donor ligand, the bond between M and Y is more accurately referred to as a coordinate-covalent bond. Also, it should be noted that the complex may exist as a dimer or higher oligomer.

Further preferably, at least one of R', Z, or R* is an electron donating moiety. Thus, highly preferably Y is a nitrogen or phosphorus containing group corresponding to the formula -N(R"")- or -P(R"")-, wherein R"" is $C_{1-10}$ alkyl or aryl, that is, an amido or phosphido group.

Most highly preferred complex compounds are amidosilane- or amidoalkanediyl- compounds corresponding to the formula:

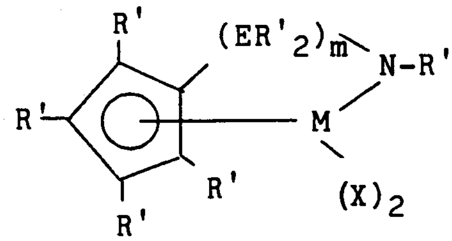

wherein:

M is titanium, zirconium or hafnium, bound in an $\eta^5$-bonding mode to the cyclopentadienyl group;
R' each occurrence is independently selected from the group consisting of hydrogen, silyl, alkyl, aryl and combinations thereof having up to 10 carbon or silicon atoms;
E is silicon or carbon;
X independently each occurrence is hydride, halo, alkyl, aryl, aryloxy or alkoxy of up to 10 carbons; and
m is 1 or 2.

Most preferred complexes are titanium or zirconium complexes.

Examples of the above most highly preferred metal coordination compounds include compounds wherein the R' on the amido group is methyl, ethyl, propyl, butyl, pentyl, hexyl, (including isomers), norbornyl, benzyl, or phenyl; R' on the cyclopentadienyl group independently each occurrence is hydrogen, methyl, ethyl, propyl, butyl, pentyl, hexyl, (including isomers), norbornyl, benzyl, or phenyl; and X independently each occurrence is chloro, bromo, iodo, methyl, ethyl, propyl, butyl, pentyl, hexyl, (including isomers), norbornyl, benzyl, or phenyl.

Specific compounds include: (tert-butylamido)dimethyl(tetramethyl-$\eta^5$-cyclopentadienyl)silanetitanium dichloride, (tert-butylamido)dimethyl(tetramethyl-$\eta^5$-cyclopentadienyl)silanezirconium dichloride, (tert-butylamido)dimethyl(-$\eta^5$-cyclopentadienyl)silanetitanium dichloride, (tert-butylamido)dimethyl(tetramethyl-$\eta^5$-cyclopentadienyl)silanetitanium dimethyl, (tert-butylamido)(tetramethyl-$\eta^5$-cyclopentadienyl)-1,2-ethanediylzirconium dichloride, (tert-butylamido)(tetramethyl-$\eta^5$-cyclopentadienyl)-1,2-ethanediyltitanium dichloride, (methylamido)(tetramethyl-$\eta^5$-cyclopentadienyl)-1,2-ethanediylzirconium dichloride, (methylamido)(tetramethyl-$\eta^5$-cyclopentadienyl)-1,2-ethanediyltitanium dichloride, (ethylamido)(tetramethyl-$\eta^5$-cyclopentadienyl)-methylenetitanium dichloro, (tert-butylamido)dibenzyl(tetramethyl-$\eta^5$-cyclopentadienyl)silanezirconium dibenzyl, (benzylamido)dimethyl(indenyl)silanetitanium dichloride, and (phenylphosphido)dimethyl(tetramethyl-$\eta^5$-cyclopentadienyl)silanezirconium dibenzyl.

The complexes are prepared by contacting the metal reactant and a group I metal derivative or Grignard derivative of the delocalized $\pi$-bonding moiety in a solvent and separating the salt byproduct. Suitable solvents for use in preparing the metal complexes are aliphatic or aromatic liquids such as cyclohexane, methylcyclohexane, pentane, hexane, heptane, tetrahydrofuran, diethyl ether, benzene, toluene, xylene, ethylbenzene and mixtures thereof.

An organic halide is then employed to raise the oxidation state of the metal in the complex. The oxidation is accomplished merely by contacting the complex and organic halide, optionally in the presence of a solvent. Preferred are the use of inert solvents, particularly tetrahydrofuran, and temperatures from -90 to 150°C, preferably 0 to 100°C, more preferrably 25 to 60°C.

Numerous organic halides may be used for the oxidation according to the present invention. Examples include methyl chloride, methylene chloride, chloroform, 1,1,1-trichloroethane, tetrachloroethylene, 1-chloropropane, 1-chlorodecane, benzylchloride, chlorobenzene, or even a solution of polyvinylchloride dissolved in a suitable solvent. The corresponding bromine or iodine containing organic halides may also be used if desired. Preferred organic halides are $C_{1-12}$ alkylchlorides having from 1 to 10 chlorine atoms. Particularly preferred organic halides are methylchloride, methylene chloride and chloroform.

The quantity of organic halide employed in the oxidation is suitably at least one equivalent based on halogen content for each mole of metal compound to be oxidized. Large excesses of organic halide can also be used without detriment. Preferred ratios of organic halide (equivalents based on halogen content: moles metal compound) are from 1:1 to 10,000:1, preferably 1:1 to 100:1, most preferably 1:1 to 1.5:1.

In order to assist in the handling of the metal compounds employed in the present process corresponding to the formula $MX_{n+1}$, it may be beneficial first to form a solid adduct thereof by the use of a suitable coordinating agent according to well known techniques in the art. For example, whereas titanium tetrachloride is a fuming liquid which is difficult to handle, one may first form an adduct of $TiCl_4$ with an ether, tertiary amine, tertiary phosphine or other basic nonprotic compound. The resulting solids may be more easily handled. A preferred coordinating adduct is tetrahydrofuran.

The reactions employed in preparing the metal complex may be conducted either heterogeneously or homogeneously. That is, the various reactants or the resulting product need not be substantially soluble in the solvent mixture. Generally the reactants are contacted under an inert atmosphere for a time from several minutes to several days. Agitation may be employed if desired.

Suitable catalysts for use according to the present invention are prepared by combining the metal coordination compound and activating cocatalyst compound in any order and in any suitable manner. Preferably the ratio of the coordination complex and cocatalyst on a molar basis is from 1:0.1 to 1:10,000. It will, of course, be appreciated that the catalyst system may also be formed *in situ* if the components thereof are added directly to the polymerization process and a suitable solvent or diluent, including condensed monomer, is used in said polymerization process. Suitable solvents include toluene, ethylbenzene, $C_{5-10}$ alkanes and mixtures thereof. In certain cases the catalysts may be isolated from solution and retained under inert atmosphere prior to use. The catalysts' components are sensitive to both moisture and oxygen and should be handled and transferred in an inert atmosphere such as nitrogen, argon, helium or under vacuum.

Polymerizations using the catalyst of the present process are conducted according to known techniques for Ziegler-Natta or Kaminsky-Sinn type polymerizations. That is, the monomer(s) and catalyst are contacted at a temperature from -30°C to 250°C, at reduced, elevated or atmospheric pressures. The polymerization is conducted under an inert atmosphere which may be a blanketing gas such as nitrogen, argon, hydrogen, or ethylene, or under vacuum. Hydrogen may additionally be utilized in the control of molecular weight through chain termination as is previously known in the art. The catalyst may be used as is or supported on a suitable support such as alumina, $MgCl_2$ or silica to provide a heterogeneous supported catalyst. A solvent may be employed if desired. Suitable solvents include toluene, ethylbenzene, and excess vinylidene aromatic or olefin monomer. The reaction may also be conducted under solution or slurry conditions, in a suspension utilizing a perfluorinated hydrocarbon or similar liquid, in the gas phase, that is, utilizing a fluidized bed reactor, or in a solid phase powder polymerization. A catalytically effective amount of the present catalyst and cocatalyst are any amounts that successfully result in formation of polymer. Such amounts may be readily determined through routine experimentation by the skilled artisan. Preferred amounts of catalyst and cocatalyst are those amounts that are sufficient to provide an equivalent ratio of addition polymerizable monomer:catalyst of from $1 \times 10^{10}$:1 to 100:1, preferably from $1 \times 10^{8}$:1 to 500:1, most preferably $1 \times 10^{6}$:1 to 1000:1. The cocatalyst is generally utilized in an amount to provide an equivalent ratio of cocatalyst:catalyst from 10,000:1 to 0.1:1, preferably from 1,000:1 to 1:1.

It is to be understood that the metal complex may undergo various transformations or form intermediate species prior to and during the course of a polymerization.

The resulting polymeric product is recovered by filtering or other suitable technique. Additives and adjuvants may be incorporated in the polymers of the present invention in order to provide desirable characteristics. Suitable additives include pigments, UV stabilizers, antioxidants, blowing agents, lubricants, plasticizers, photosensitizers, and mixtures thereof.

Preferably such polymers possess a Mw of greater than 13,000, more preferably greater than 20,000 and most preferably greater than 30,000. Also preferably such polymers possess a melt index ($I_2$), ASTM D-1238 Procedure A, condition E, of less than 125, more preferably from 0.01 - 100 and most preferably from 0.1 to 10.

Prior to polymerization according to the present process, the monomers and solvents, if any, may be purified by vacuum distillation, and/or contacted with molecular sieves, silica, or alumina to remove impurities. In addition, reactive blanking agents, such as trialkylaluminum compounds, alkali metals and metal alloys, especially Na/K, may be used to remove impurities. Preferred operating conditions for such polymerization reactions are pressures from atmospheric to 1000 atmospheres and temperatures from 30°C to 200°C. Polymerizations at temperatures above the autopolymerization temperature of the respective monomers may contain small amounts of homopolymer polymerization products resulting from free radical polymerization.

Having described the invention, the following examples are provided as further illustrative and are not to be construed as limiting. Unless stated to the contrary, parts and percentages are based on weight.

<u>Example 1 Preparation of</u>
<u>(Tert-butylamido)dimethyl(tetramethyl-η<sup>5</sup>-cyclopentadienyl)silanetitanium dichloride,</u> $[(Me_4C_5)SiMe_2N^tBu]TiCl_2$

In a drybox, 4.0 mL of 2.0 M isopropylmagnesium chloride in diethyl ether was syringed into a 100 mL flask. The ether was removed under reduced pressure to leave a colorless oil. 20 mL of a 4:1 (by volume ) toluene:tetrahydrofuran (THF) mixture was added followed by 0.97 g of (tert-butylamino)dimethyl(tetramethylcyclopentadienyl)silane. The solution was heated to reflux. After 8-10 hours, a white precipitate began to form. After refluxing for a total of 27 hours, the solution was cooled and the volatile materials were removed under reduced pressure. The white solid residue was slurried in pentane and filtered to leave a white powder (1.23 g, 62 percent yield) of $Me_4C_5SiMe_2N^tBuMg_2Cl_2(THF)_2$.

In the drybox, 0.10 g of $TiCl_3(THF)_3$ was suspended in 40 mL of THF. 0.138 g of solid $Me_4C_5SiMe_2N^tBuMg_2Cl_2(THF)_2$ was added, resulting in a color change from pale blue to deep purple, signifying the

formation of the complex (tert-butylamido)dimethyl(tetramethyl-$\eta^5$-cyclopentadienyl)silanetitanium chloride. After stirring for 5 minutes, 0.17 ml of a 1.56 M solution of methylenechloride in tetrahydrofuran was added. The color changed to bright yellow. After several minutes the THF was removed under reduced pressure. The product was recovered by extraction in pentane. The yield was 70 percent. The product's identity was confirmed as (tert-butylamido)dimethyl(tetramethyl-$\eta^5$-cyclopentadienyl)silanetitanium dichloride by $^1H$ NMR, ($C_6D_6$): $\delta$ 1.992 (s), 1.986 (s), 1.414 (s), 0.414 (s).

Polymerization of Styrene/ Ethylene

Polymerization of a styrene/ethylene mixture was accomplished by combining 1.65 mL of a 10 percent solution of MAO in toluene with a solution of 45 mL of toluene and 50 mL styrene in a stainless steel shot tank. 250 $\mu$L of a 0.010 M solution of (tert-butylamido)dimethyl(tetramethyl-$\eta^5$-cyclopentadienyl)silanetitanium dichloride was added to 2.5 mL of toluene in a second shot tank. Both shot tanks were sealed, removed from the glove box, and attached to a 600 mL stainless steel pressure vessel. The pressure vessel was evacuated and purged with argon.

The styrene/toluene/MAO solution was added to the pressure vessel and warmed to 89°C under 620 kPa (90 psig) ethylene with stirring. At this time the catalyst solution was added and the pressure was increased to 1275 kPa (185 psig) and regulated between 1240-1275Kpa (180-185 psig). An exotherm raised the temperature to 95°C. The temperature was lowered to 90°C and was then regulated between 90-92°C for the remainder of the reaction.

After 1.0 hr. the ethylene feed was discontinued. The reaction was vented to the atmosphere and cooled to 30°C at which time methanol was added. The product was collected, washed with methanol and residual solvents were removed under reduced pressure at 120°C which resulted in 9.02 g of material. $^{13}C$ NMR analysis of this material showed it to be a random copolymer of styrene (15.2 percent on a molar basis) and ethylene, free of peaks attributed to polystyrene.

(Olefin Polymerization)

Ethylene was polymerized by combining 5 mL of a 1 M solution of triethyl aluminum in mixed $C_6$ alkane solvent and 0.5 mL of a 0.01 M solution of (tert-butylamido)dimethyl(tetramethyl-$\eta^5$-cyclopentadienyl)silanetitanium dichloride in toluene in a stainless steel (SS) shot tank. The titanium catalyst and triethyl aluminum cocatalyst solution was then added under pressure to a 3 L SS pressure vessel containing 2 L of mixed alkane solvent (Isopar™ E, available from Exxon Chemicals, Inc.) under 3100 kPa (450 psig) ethylene at 150°C. The reaction temperature was maintained at 150°C for 10 minutes. The ethylene pressure was held constant, and a mass-flow meter measured the uptake of ethylene to be 15.7 g. The polymer solution was then removed from the pressure vessel and the polyethylene was recovered after drying under reduced pressure at 90°C overnight. Yield was 15.7 g.

Example 2

In a drybox, 0.20 g of $TiCl_3(THF)_3$ was suspended in 40 mL of THF. 0.277 g of solid $Me_4C_5SiMe_2N^tBuMg_2Cl_2(THF)_2$ was added, resulting in a color change from pale blue to deep purple. After stirring for 5 minutes, 0.17 ml of a 1.56 M solution of methylenechloride in tetrahydrofuran was added. The color changed to bright yellow over a period of one hour. The THF was removed under reduced pressure. The product was recovered by extraction in pentane. The yield of the bright yellow (tertbutylamido)dimethyl(tetramethyl-n5-cyclopentadienyl)silanetitanium dichloride was 0.144g 72.4 percent.

Example 3

In an inert atmosphere glove box a 100 ml flask was loaded with 0.100 g of $TiCl_3(THF)_3$ and 20 ml of THF. To the resulting slury was added solid $[MgCl]_2[Me_4C_5)SiMe_2N^tBu](C_2H_5O)_2$ (0.124 g), using an additional 10 ml of THF to wash the solid into the reaction flask. The mixture was stirred for 5 minutes followed by the addition of 1 equivalent of decyl chloride (0.048 g). The reaction was then stirred for 1.75 h. The THF was removed under reduced pressure and the product was extracted using pentane and filtered. The pentane was also removed under reduced pressure and the product dried under reduced pressure. The resulting oxidation product, $[(Me_4C_5)SiMe_2N^tBu]TiCl_2$, was identified by $^1H$ NMR analysis.

## Claims

1. A process for preparing a metal coordination complex corresponding to the formula:

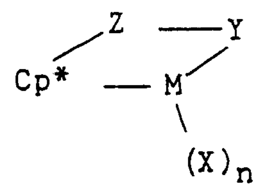

wherein:

M is a metal of Group 4, or the Lanthanide Series of the Periodic Table of the Elements;

Cp* is a substituted cyclopentadienyl group $\pi$-bound in an $\eta^5$ bonding mode to M;

Z is a moiety comprising boron, or a member of Group 14 of the Periodic Table of the Elements, and optionally sulfur or oxygen, said moiety having up to 20 non-hydrogen atoms, and optionally Cp* and Z together form a fused ring system;

X independently each occurrence is an anionic ligand group having up to 30 non-hydrogen atoms;

n is 1 or 2 depending on the valence of M; and

Y is an anionic ligand group bonded to Z and M comprising nitrogen, phosphorus, oxygen or sulfur and having up to 20 non-hydrogen atoms, optionally Y and Z together form a fused ring system;
the steps of the process comprising:

(A) contacting a metal compound of the formula $MX_{n+1}$, or a coordinated adduct thereof with a dianionic salt compound corresponding to the formula:

$$(L^{+x})_y(Cp^*\text{-}Z\text{-}Y)^{-2}$$

or

$$((LX'')^{+x})_y(Cp^*\text{-}Z\text{-}Y)^{-2}$$

wherein:

L is a metal of Group 1 or 2 of the Periodic Table of the Elements,
X" is bromo, chloro or iodo,
x and y are either 1 or 2 and the product of x and y equals 2, and
M, X, Cp*, Z, and Y are as previously defined;

(B) contacting the resulting complex with an organic, halide selected from the group consisting of methyl chloride, methylene chloride, chloroform, 1,1,1-trichloroethane, tetrachloroethylene, 1-chloropropane, 1-chlorodecane, benzylchloride and chlorobenzene under reaction conditions suitable to raise the oxidation state of the metal and incorporate only the halogen ligand of the organic halide into the complex; and

(C) recovering the resulting product.

**2.** A process according to claim 1 wherein the metal, M, is titanium or zirconium.

**3.** A process according to claim 1 wherein the organic halide is a $C_{1\text{-}12}$ alkylohloride having from 1 to 10 chlorine atoms.

**4.** A process according to claim 3 wherein the organic halide is methylchloride, methylene chloride or chloroform.

## Patentansprüche

1. Verfahren zur Herstellung eines Metallkoordinationskomplexes entsprechend der Formel:

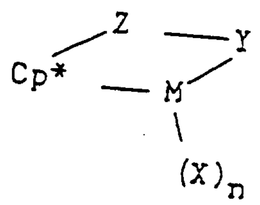

worin:

M ein Metall der Gruppe 4 oder der Lanthanidenreihe des Periodensystems der Elemente ist;

Cp* eine substituierte Cyclopentadienylgruppe ist, die über einen $\eta^5$-Bindungsmodus an M $\pi$-gebunden ist;

Z eine Bor oder ein Element der Gruppe 14 des Periodensystems der Elemente und gegebenenfalls Schwefel oder Sauerstoff umfassende Komponente ist, wobei die Komponente bis zu 20 Nicht-Wasserstoffatome umfaßt und gegebenenfalls Cp* und Z zusammen ein kondensiertes Ringsystem bilden;

X unabhängig bei jedem Auftreten eine anionische Ligandengruppe mit bis zu 30 Nicht-Wasserstoffatomen ist;

n in Abhängigkeit von der Valenz von M 1 oder 2 ist; und

Y eine anionische Ligandengruppe ist, die an Z gebunden ist und M Stickstoff, Phosphor, Sauerstoff oder Schwefel umfaßt und bis zu 20 Nicht-Wasserstoffatome enthält, wobei Y und Z gegebenfalls zusammen ein kondensiertes Ringsystem bilden;
wobei die Schritte des Verfahrens umfassen:

(A) in Kontakt bringen einer Metallverbindung der Formel $MX_{n+1}$ oder eines koordinierten Addukts davon mit einer dianionischen Salzverbindung entsprechend der Formel:

$$(L^{+x})_y(Cp^*\text{-}Z\text{-}Y)^{-2}$$

oder

$$((LX'')^{+x})_y(Cp^*\text{-}Z\text{-}Y)^{-2},$$

worin:

L ein Metall der Gruppe 1 oder 2 des Periodensystems der Elemente ist,
X" Brom, Chlor oder Iod ist,
x und y entweder 1 oder 2 sind und das Produkt von x und y gleich 2 ist, und
M, X, Cp*, Z und Y wie vorstehend definiert sind;

(B) in Kontakt bringen des resultierenden Komplexes mit einem organischen Halogenid, ausgewählt aus der Gruppe, bestehend aus Methylchlorid, Methylenchlorid, Chloroform, 1,1,1-Trichlorethan, Tetrachlorethylen, 1-Chlorpropan, 1-Chlordecan, Benzylchlorid und Chlorbenzol, unter Reaktionsbedingungen, die geeignet sind, um den Oxidationszustand des Metalls zu erhöhen und nur den Halogenliganden des organischen Halogenids in den Komplex einzuführen; und

(C) Gewinnen des resultierenden Produkts.

2. Verfahren nach Anspruch 1, worin das Metall M Titan oder Zirkonium ist.

3. Verfahren nach Anspruch 1, worin das organische Halogenid ein $C_{1-12}$-Alkylchlorid mit 1 bis 10 Chloratomen ist.

4. Verfahren nach Anspruch 3, worin das organische Halogenid Methylchlorid, Methylenchlorid oder Chloroform ist.

## Revendications

1. Procédé pour préparer un complexe de coordination métallique correspondant à la formule:

I 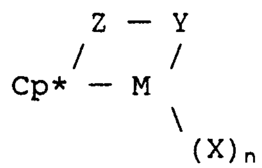

dans laquelle:

M est un métal du Groupe 4 ou de la série des lanthanides du Tableau Périodique des Eléments;
Cp* est un groupe cyclopentadiényle substitué lié par liaison de type $\eta^5$ à M;
Z est un groupe comprenant du bore, ou un élément du Groupe 14 du Tableau Périodique des Eléments, et éventuellement du soufre ou de l'oxygène, ledit groupe ayant jusqu'à 20 atomes différents de l'hydrogène, et éventuellement Cp* et Z forment ensemble un système à cycle condensé;
chaque X est indépendamment un groupe ligand anionique ayant jusqu'à 30 atomes différents de l'hydrogène;
n vaut 1 ou 2 selon la valence de M; et
Y est un groupe ligand anionique lié à Z et à M comprenant de l'azote, du phosphore, de l'oxygène ou du soufre et ayant jusqu'à 20 atomes différents de l'hydrogène, éventuellement Y et Z forment ensemble un système à cycle condensé;
les étapes du procédé consistant:

A) à mettre en contact un composé métallique de formule $MX_{n+1}$ ou un de ses produits d'addition et de coordination avec un composé de sel dianionique correspondant à la formule:

$$(L^{+x})_y(Cp^*\text{-}Z\text{-}Y)^{-2} \qquad \text{(II)}$$

ou

$$((LX'')^{+x})_y(Cp^*\text{-}Z\text{-}Y)^{-2} \qquad \text{(III);}$$

dans laquelle:

L est un métal du Groupe 1 ou 2 du Tableau Périodique des Eléments,
X" est bromo, chloro ou iodo,
x et y valent 1 ou 2 et le produit de x et y est égal à 2, et
M, X, Cp*, Z et Y sont tels que définis précédemment;

B) à mettre en contact le complexe résultant avec un halogénure organique choisi dans le groupe formé par le chlorure de méthyle, le chlorure de méthylène, le chloroforme, le 1,1,1-trichloroéthane, le tétrachloroéthylène, le 1-chloropropane, le 1-chlorodécane, le chlorure de benzyle et le chlorobenzène dans des conditions de réaction appropriées afin d'élever l'état d'oxydation du métal et de n'incorporer que le ligand halogéné de l'halogénure organique dans le complexe; et
C) à récupérer le produit résultant.

2. Procédé selon la revendication 1, dans lequel le métal, M, est le titane ou le zirconium.

3. Procédé selon la revendication 1, dans lequel l'halogénure organique est un chlorure d'alkyle en $C_1$ à $C_{12}$ ayant 1 à 10 atomes de chlore.

4. Procédé selon la revendication 3, dans lequel l'halogénure organique est le chlorure de méthyle, le chlorure de méthylène ou le chloroforme.